# EUROPEAN PATENT SPECIFICATION

(11) **EP 2 156 964 B1**
(45) Date of publication and mention of the grant of the patent: **25.06.2014**
(21) Application number: 09001089.3
(22) Date of filing: 27.01.2009
(51) Int. Cl.: B60B 1/00, B60B 1/04, B60B 21/06, B60B 1/02

(54) **Spoked rear wheel for a bicycle**
Speichenhinterrad für ein Fahrrad
Roue arrière dotée de rayons pour bicyclette

(30) Priority: 22.08.2008 TW 97132178
(43) Date of publication of application: 24.02.2010
(73) Proprietor: Shimano, Inc., Osaka 590-8577 (JP)
(72) Inventor: Koshiyama, Kazuki, Sakai City Osaka 590-8577 (JP)
(74) Representative: Prinz & Partner

(56) References cited:
- FR-A1- 2 792 250
- US-A1- 2002 047 302

## Description

### BACKGROUND OF THE INVENTION

### 1. Field of the Invention

The present invention relates to a spoked rear wheel for a bicycle, in particular, to a spoked rear wheel for a bicycle that can improve the rigidity of the wheel.

### 2. Description of Related Art

It is known to provide two hub flanges on the rear hub for mounting spokes, with one side of the hub flange located on the driving side (often on the right side of the cyclist) driven by the sprocket, and the other side of the hub flange located in opposition to the driving side (left side).

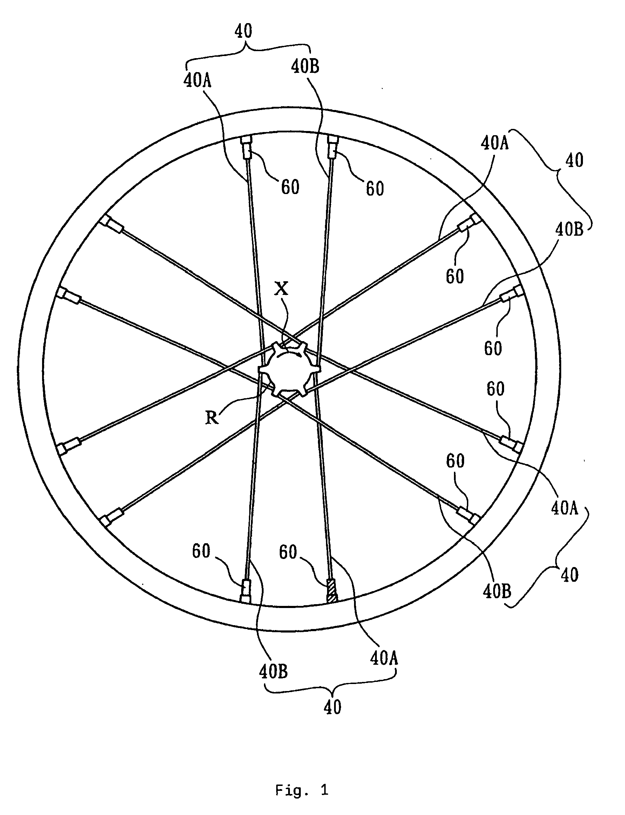

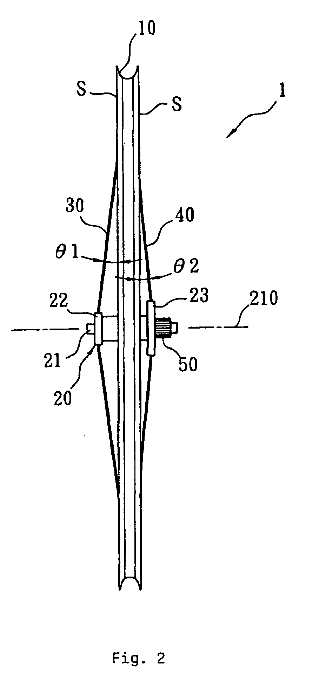

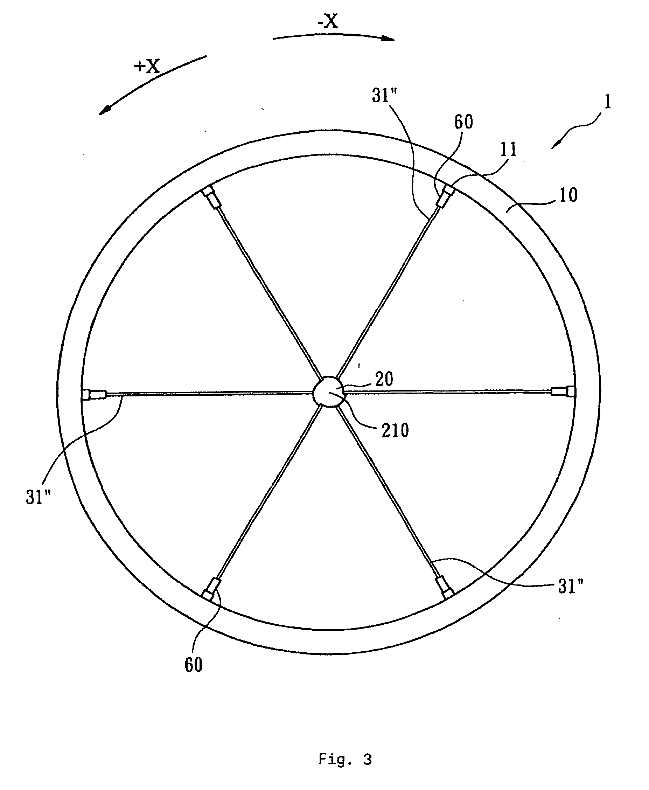

Typically, as shown in FIG. 1, the set of spokes 40 arranged on the right side flange R adopt the cross pattern (the spokes 40A, 40B cross/intersect each other as viewed from the transverse direction). Since the included angle θ1 formed between the spoke attached to the left side flange and the horizontal plane S of the rim is greater than the included angleθ2 formed between the spoke attached to the right side flange and the horizontal plane S of the rim (see FIG. 2), from the aspect of tension equilibrium in lateral direction, the tension of each spoke mounted on the left side flange is less than the tension of each spoke mounted on the right side flange R. If the set of spokes of the left side flange are arranged in cross pattern, the same as the set of spokes of the right side flange de are, the adapter 60 (as shown in shaded area in FIG. 1) mounted on the spoke 40A under compressive force tends to disengage from the spoke when the hub 20 rotates. Therefore, to overcome the problem of disengagement, a spoked rear wheel which adopts a radial pattern (the extensions of all the spokes pass through the center line 210 of hub axle 21) for the arrangement of the spokes mounted on the left side flange has been suggested in the prior art (see FIG. 3).

Document FR 2792250 discloses a similar spoked rear wheel.

### SUMMARY OF THE INVENTION

However, in the existing spoked rear wheel, all the spokes are alike, that is, all the spokes are the same in size, and are of the same material.

Reference is now made to the spoke 31" mounted on the left side flange and located at 1 o'clock direction (see FIG. 3). When the hub 20 begins to rotates slightly in the driving direction X, rim 10 does not yet rotate immediately and is at halt (that is, the first rim attachment point 11 is stationary). Under the circumstances, the spoke 31" will be pulled by the hub 20, and the rim 10 can be driven by this tensile force. That is to say, tensile load will be imposed on the spoke 31", resulting in deformation. Therefore, when the wheel is in motion, the wheel tends to be deformed, and problems may arise when the rim contacts the brake block.

To overcome the above shortcomings of the conventional art, the present invention provides a spoked rear wheel for a bicycle that may improve the rigidity of the wheel, while still maintaining a light weight of the spokes.

The spoked rear wheel for a bicycle according to a first aspect of the present invention comprises:
a rim,
a hub having a hub axle, a first spoke attachment portion, and a second spoke attachment portion spaced from the first spoke attachment portion,
a first set of spokes for connecting said rim to said first spoke attachment portion, and
a second set of spokes for connecting said rim to said second spoke attachment portion,
said first set of spokes include a first spoke and a second spoke,
said second spoke includes a rim end portion connected to said rim, a hub edge portion connected to said first spoke attachment portion, a second central portion between said rim end portion and hub edge portion, and having a second cross-sectional area,
said first spoke includes a rim end portion connected to said rim, a hub edge portion connected to said first spoke attachment portion, a first central portion between said rim end portion and hub edge portion, and having a first cross-sectional area bigger than the second cross-sectional area,

The spoked rear wheel for a bicycle according to a second aspect of the present invention comprises:
a rim,
a hub having a hub axle, a first spoke attachment portion, and a second spoke attachment portion spaced from the first spoke attachment portion,
a first set of spokes for connecting said rim to said first spoke attachment portion, and
a second set of spokes for connecting said rim to said second spoke attachment portion,
said first set of spokes include at least two spokes of different materials.

Preferably, in the spoked rear wheel for a bicycle according to the second aspect of the present invention, the two spokes of different materials comprise a first spoke formed of a first material, and a second spoke formed of a second material, wherein the elastic modulus of the first material is higher than that of the second material.

Preferably, in the spoked rear wheel for a bicycle according to the first and second aspects of the present invention, the second spoke attachment portion is disposed at a position closer to a driving mechanism than the first spoke attachment portion.

Further, in the spoked rear wheel for a bicycle according to the first and second aspects of the present invention, said first spoke is connected to said rim at a first rim attachment point, and to a first spoke attachment portion at a first hub attachment point; wherein when driving the wheel, said first hub attachment point deflects towards a driving direction relative to a plane containing said center line of the hub axle and said first rim attachment point;
said second spoke is connected to said rim at a second rim attachment point, and to said first spoke attachment portion at a second hub attachment point; wherein when driving the wheel, said second hub attachment point deflects towards a direction in opposition to the driving direction, relative to a plane containing said center line of the hub axle and said second rim attachment point.

Preferably, in the spoked rear wheel for a bicycle according to the first and second aspects of the present invention, the amount of deflection of said first spoke towards the driving direction is greater than the mount of deflection of said second spoke towards the direction in opposition to said driving direction.

More preferably, in the spoked rear wheel for a bicycle according to the first and second aspects of the present invention, said first spoke is alternately arranged with said second spoke along a peripheral direction of the wheel.

More preferably, in the spoked rear wheel for a bicycle according to the first and second aspects of the present invention, the total number of spokes of said first set of spokes are less than that of said second set of spokes.

More preferably, in the spoked rear wheel for a bicycle according to the first and second aspects of the present invention, the total number of spokes of said first set of spokes is half the total number of spokes of said second set of spokes.

Most preferably, in the spoked rear wheel for a bicycle according to the first and second aspects of the present invention, said second set of spokes are arranged such that the spokes intersect each other as viewed from the direction parallel to said center line of the hub axle.

According to the first aspect of the present invention, since the first set of spokes includes first and second spokes, and the cross-sectional area of the first central portion of the first spoke is greater than that of the second central portion of the second spoke, the cross-sectional area of the central portion of the first spoke (which is subject to a tensile load during driving) is increased to improve the rigidity. Therefore, the tensile deformation is reduced, while the light weight of the spokes is maintained, and the wheel is prevented from being deformed, and the rim is prevented from contacting the brake block.

Further, according to the second aspect of the present invention, since the first set of spokes comprises a first spoke and a second spoke formed of a material different from that of the first spoke, and the elastic modulus of the first material is higher than that of the second material (that is, only the elastic modulus of the first material is increased to improve the rigidity). Therefore, the tensile deformation is reduced, while the light weight of the spokes is maintained, and the wheel is prevented from being deformed, and the rim is prevented from contacting the brake block.

Further, according to the present invention, by disposing the second spoke attachment portion at a position closer to the driving mechanism than the first spoke attachment portion, the second spoke is arranged in a cross pattern that is suitable for transmitting the driving force, thus improving the driving efficiency.

Further, according to the present invention, the first hub attachment point is arranged to deflect towards a driving direction relative to a plane constituting the center line of the hub axle and the first rim attachment point; and the second hub attachment point is arranged to deflect towards a direction in opposition to the driving direction, relative to a plane constituting the center line of the hub axle and the second rim attachment point. That is to say, the first spoke that is subject to a tensile load during driving is arranged to deflect towards the driving direction, and the second spoke that is subject to a compression load during driving is arranged to deflect towards the direction in opposition to the driving direction. In this manner, improved tension equilibrium for the spokes can be achieved.

Further, according to the present invention, by making the amount of deflection of the first spoke towards the driving direction greater than the mount of deflection of the second spoke towards the direction in opposition to the driving direction, the first spoke that is arranged to deflect towards the driving direction will aid in driving the rim towards the rotational direction, thereby further improving the driving efficiency of the wheel.

Further, according to the present invention, by arranging the first and second spokes alternately along a peripheral direction, an optimal tension equilibrium may be achieved.

According to the present invention, by making the total number of spokes of the first set of spokes to be less than that of the second set of spokes, or further making the total number of spokes of the first set of spokes to be half the total number of the spokes of the second set of spokes, the tension of each spoke of the first set of spokes which bear a larger included angle θ1 will be less than the tension of each spoke of the second set of spokes which bear a smaller included angle θ2. From the aspect of tension equilibrium in lateral direction, the tension of each spoke can be increased by reducing the number of spokes in the first set of spokes, or preferably reducing the total number of spokes in the first set of spokes to be half the total number of spokes in the second set of spokes. In this way, the tension difference between the two sets of spokes can be minimized.

Furthermore, according to an aspect of the present invention, by arranging the second set of spokes such that the spokes intersect each other as viewed from a direction parallel to the center line of the hub axle, that is, by arranging the second set of spokes of the driving side in a cross pattern suitable for transmitting the driving force, the driving efficiency can be improved.

The foregoing and other objects, features and advantages of embodiments of the present invention will be apparent from the following detailed description of the preferred embodiment, which makes reference to several drawing figures.

### BRIEF DESCRIPTION OF THE DRWINGS

FIG. 1 illustrates a spoked wheel as known in the prior art, in which the spokes are arranged in cross pattern.
FIG. 2 is a rear view of the spoked rear wheel according to the first and second embodiments of the present invention.
FIG. 3 is a left side view of the spoked rear wheel as known in the prior art.
FIG. 4 is a left side view of the spoked rear wheel according to the first embodiment of the present invention.
FIG. 5 is a left side view of the spoked rear wheel according to the second embodiment of the present invention.
FIG. 6 is a right side view of the spoked rear wheel according to the first and second embodiments of the present invention, in which the first and second sets of spokes are shown.

### DETAILED DESCRIPTION OF A PREFERRED EMBODIMENT

### (First embodiment)

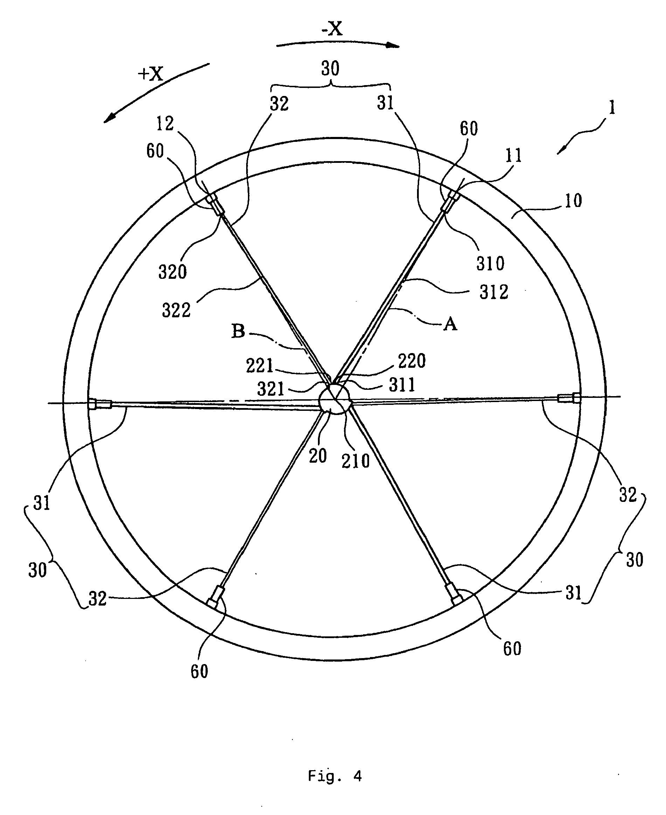

Reference is now made to FIGS. 2 and 4, in which FIG. 2 is a rear view of the spoked rear wheel according to the first embodiment of the present invention, and FIG. 4 is a left side view thereof.

As shown in the figures, the spoked rear wheel 1 according to the first embodiment of the present invention comprises: a rim 10, a hub 20 having a hub axle 21, a first spoke attachment portion 22, and a second spoke attachment portion 23 spaced from the first spoke attachment portion 22, a first set of spokes 30 for connecting the rim 10 to the first spoke attachment portion 22, and a second set of spokes 40 for connecting the rim 10 to the second spoke attachment portion 23.

As shown in FIG. 4, the first set of spokes 30 comprises: a second spoke 32 that is subject to compression load during driving, and a first spoke 31 that is subject to tensile load during driving. The second spoke 32 comprises: a rim end portion 320 connected to the rim 10, a hub edge portion 321 connected to the first spoke attachment portion 22, a second central portion 322 connected to the rim end portion and hub edge portion, and having a second cross-sectional area. The first spoke 31 includes a rim end portion 310 connected to the rim 10, a hub edge portion 311 connected to the first spoke attachment portion 22, a first central portion 312 connected to the rim end portion and hub edge portion, and having a first cross-sectional area bigger than the second cross-sectional area.

The first spoke 31 may be formed of stainless steel having an outer diameter of 1.8mm, and the second spoke 32 may be formed of stainless steel having an outer diameter of1.5mm.

Thus, by increasing the cross-sectional area of the central portion of the first spoke which is subject to a tensile load during driving, the rigidity is improved. The tensile deformation can be reduced, while the light weight of the spokes is maintained, and the wheel is prevented from being and the wheel is prevented from being deformed, and the rim is prevented from contacting the brake block.

As shown in FIG. 2, the second spoke attachment portion 23 is disposed at a position closer to the driving mechanism 50 than the first spoke attachment portion 22.

Further, as shown in FIG. 4, the first spoke 31 is connected to the rim 10 at the first rim attachment point 11, and to the first spoke attachment portion 22 at the first hub attachment point 220. The first hub attachment point 220 deflects towards the driving direction X relative to a plane constituting the center line 210 of the hub axle 21 and the first rim attachment point 11.

Further, the second spoke 32 is connected to the rim 10 at the second rim attachment point 12, and to the first spoke attachment portion 22 at the second hub attachment point 221. The second hub attachment point 221 deflects towards a direction (-X) in opposition to the driving direction X, relative to a plane constituting the center line 210 of the hub axle 21 and the second rim attachment point 12.

By arranging the first spoke 31 that is subject to a tensile load during driving to deflect towards the driving direction X, and the second spoke 32 that is subject to a compression load during driving to deflect towards the direction (-X) in opposition to the driving direction X, improved tension equilibrium for the spokes can be achieved.

With reference to FIG. 4, the amount of deflection of the first spoke 31 towards the driving direction X is greater than the amount of deflection of the second spoke 32 towards the direction (-X) in opposition to the driving direction X. Since the first spoke 31 that is arranged to deflect towards the driving direction X will aid in driving the rim 10 towards the rotational direction, the driving efficiency of the wheel can be improved.

As shown, the first spoke 31 is alternately arranged with the second spoke 32 along the peripheral direction. There are altogether three groups of spokes constituted by a first spoke 31 and a second spoke 32.

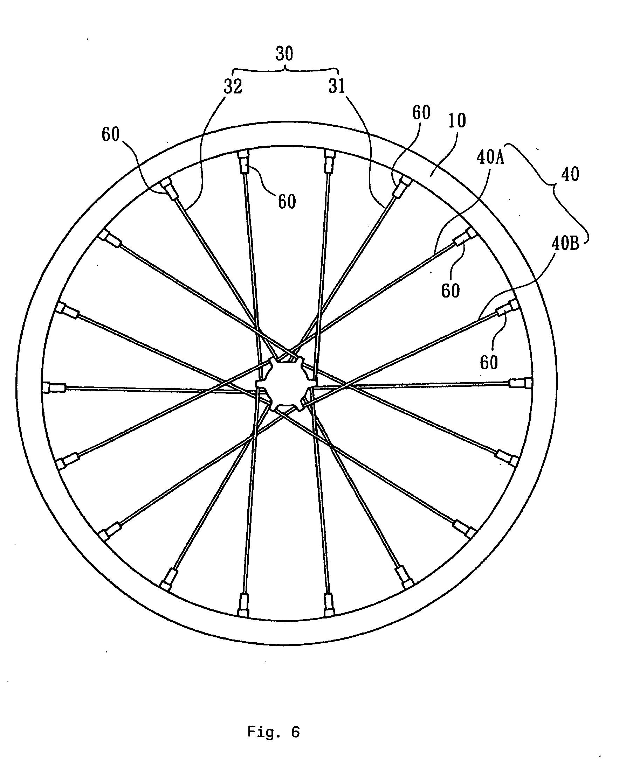

As shown in FIG. 6, the total number of spokes 31, 32 of the first set of spokes 30 is only 6, while the total number of spokes 40A, 40B of the second set of spokes 40 is 12. That is, the total number of spokes of the first set of spokes 30 is less than that of the second set of spokes 40, and is only half the total number of the second set of spokes 40.

When the number of spokes of the left side of the hub 20 is equal to that of the right side, as mentioned above, the tension of each spoke 31, 32 of the first set of spokes 30 which bear a larger included angle θ1 will be less than the tension of each spoke 40A, 40B of the second set of spokes 40 which bear a smaller included angle θ2. From the aspect of tension equilibrium in lateral direction, the tension of each spoke can be increased by reducing the total number of spokes in the first set 30 of spokes to be half the total number of spokes in the second set 40 of spokes, the tension difference between the spokes 31, 32 of the first set 30 and the spokes 40A, 40B of the second set 40 of spokes can be minimized. Further, by reducing the number of spokes of the first set of spokes 30, the tension of each spoke 31, 32 can be increased, thus preventing the adapter 60 from disengagement.

Furthermore, as shown in FIG. 1, the second set of spokes 40 is arranged such that the spokes 40A, 40B intersect each other as viewed from a direction parallel to the center line 210 of the hub axle 21. In this way, the second set of spokes 40 that is in proximity to the driving mechanism 50 is arranged in a cross pattern that is suitable for transmitting the driving force, thus improving the driving efficiency.

### (Second embodiment)

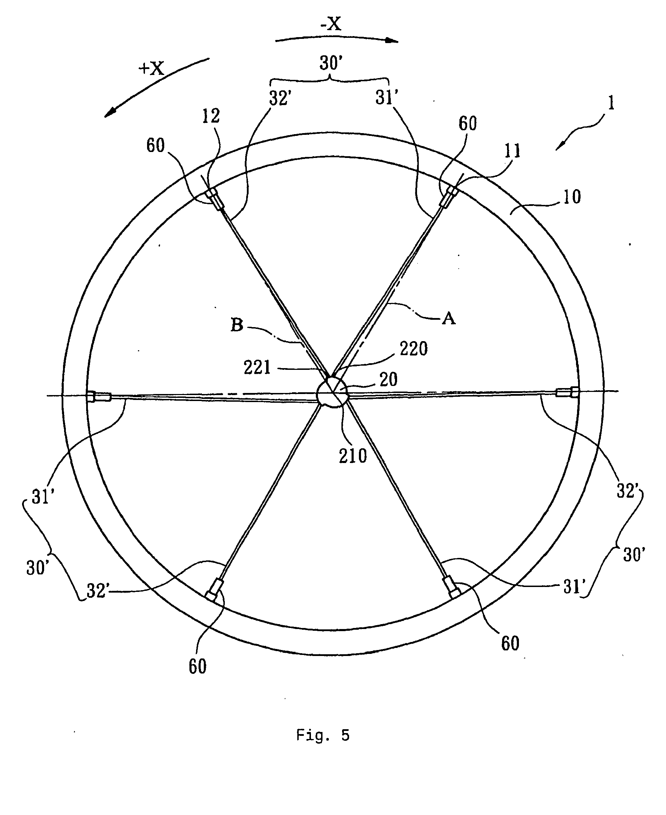

FIG. 5 illustrates the spoked rear wheel according to the second embodiment of the present invention. In the figure, structural elements that have substantially the same function and structure are denoted with the same reference numerals as the first embodiment, and repeated explanation of these structural elements is omitted.

The first set of spokes 30' of the second embodiment is different from the first set of spokes 30 of the first embodiment in that it is formed of two spokes of different materials, namely the first spoke 31' of the first material and the second spoke 32' of the second material. Further, the elastic modulus of the first material is higher than that of the second material.

The second spoke 32' may be formed of aluminum so that it has a light weight, and the first spoke 31' may be formed of stainless steel having an elastic modulus higher than that of the aluminum.

The rigidity of the first spoke 31' (which is subject to a tensile load during driving) is improved by increasing the elastic modulus thereof. Therefore, the tensile deformation is reduced, while the light weight of the spokes is maintained, and the wheel is prevented from being and the wheel is prevented from being deformed, and the rim is prevented from contacting the brake block.

Further, similar to the first embodiment, the same functions and effects can be obtained: by disposing the second spoke attachment portion 23 at a position closer to the driving mechanism 50 than the first spoke attachment portion 22; by arranging the first spoke 31' that is subject to a tensile load during driving to deflect towards the driving direction X, and the second spoke 32' that is subject to a compression load during driving to deflect towards the direction (-X) in opposition to the driving direction X; by making the amount of deflection of the first spoke 31' towards the driving direction greater than the mount of deflection of the second spoke 32' towards the direction in opposition to the driving direction; by arranging the first spoke 31' to be alternate with the second spoke 32' along the peripheral direction; by making the total number of spokes of the first set of spokes 30 to be less than that of the second set of spokes 40, preferably to be half the total number of the second set of spokes 40; or by arranging the second set of spokes 40 in such a manner that the spokes intersect each other as viewed from a direction parallel to the center line 210 of the hub axle 21, .

In view of the above, the spoked rear wheel for a bicycle according to the present invention may improve the rigidity of the wheel, while the light weight of the spokes is maintained.

The foregoing description of the preferred embodiment of the invention is provided for illustration only, and not for the purpose of limiting the invention. For example, in the preferred embodiment, three first spoke are shown, but the number of the first spoke can be one or more than one. That is to say, more than two or four first spokes can also serve the purpose of the present invention.

## Claims

1. A spoked rear wheel for a bicycle comprising:
a rim (10);
a hub (20) having a hub axle (21), a first spoke attachment portion (22), and a second spoke attachment portion (23) spaced from said first spoke attachment portion (22);
a first set of spokes (30) for connecting said rim to said first spoke attachment portion (22); and
a second set of spokes (40) for connecting said rim to said second spoke attachment portion (23);
said first set of spokes (30) include a first spoke (31) and a second spoke (32);
said second spoke (32) includes a rim end portion (320) connected to said rim (10), a hub edge portion (321) connected to said first spoke attachment portion (22), a second central portion (322) between said rim end portion (320) and hub edge portion (321) and having a second cross-sectional area,
said first spoke (31) includes a rim end portion (310) connected to said rim (10), a hub edge portion (311) connected to said first spoke attachment portion (22), a first central portion (312) between said rim end portion (310) and hub edge portion (311) and having a first cross-sectional area greater than the second cross-sectional area.

2. The spoked rear wheel according to claim 1, wherein said second spoke attachment portion (23) is disposed at a position closer to a driving mechanism than the first spoke attachment portion (22).

3. The spoked rear wheel according to claim 1 or 2, wherein said first spoke (31) is connected to said rim (10) at a first rim attachment point (11) and to said first spoke attachment portion (22) at a first hub attachment point (220), wherein when driving the wheel, said first hub attachment point (220) deflects towards a driving direction (+X) relative to a plane constituting containing the center line (210) of the hub axle (21) and said first rim attachment point (11);
said second spoke (32) is connected to said rim (10) at a second rim attachment point (12) and to said first spoke attachment portion (22) at a second hub attachment point (221), wherein when driving the wheel, said second hub attachment point (221) deflects towards a direction (-X) opposite said driving direction, relative to a plane containing said center line (210) of the hub axle (21) and said second rim attachment point (12).

4. The spoked rear wheel according to claim 3, wherein the amount of deflection of said first spoke (31) towards said driving direction (+X) is greater than the amount of deflection of said second spoke (32) towards the direction (-X) opposite said driving direction.

5. The spoked rear wheel according to claim 3, wherein said first spoke (31) is alternately arranged with said second spoke (32) along a peripheral direction of the wheel.

6. The spoked rear wheel according to claim 1 or 2, wherein the total number of spokes of said first set of spokes (30) is less than that of said second set of spokes (40), in particular wherein the total number of spokes of said first set of spokes (30) is half the total number of spokes of said second set of spokes (40).

7. The spoked rear wheel according to claim 1 or 2, wherein said second set of spokes (40) are arranged such that the spokes intersect each other as viewed from the direction parallel to said center line (210) of the hub axle (21).

8. A spoked rear wheel for a bicycle comprising:
a rim (10);
a hub (20) having a hub axle (21), a first spoke attachment portion (22), and a second spoke attachment portion (23) spaced from said first spoke attachment portion (22);
a first set of spokes (30') for connecting said rim to said first spoke attachment portion (22); and
a second set of spokes (40) for connecting said rim to said second spoke attachment portion (23);
wherein said first set of spokes (30') include at least two spokes (31', 32') of different materials.

9. The spoked rear wheel according to claim 8, wherein the two spokes (31', 32') of different materials comprise a first spoke (31') formed of a first material, and a second spoke (32') formed of a second material, wherein the elastic modulus of the first material is higher than that of the second material.

10. The spoked rear wheel according to claim 8, wherein said second spoke attachment portion (23) is disposed at a position closer to a driving mechanism than the first spoke attachment portion (22).

11. The spoked rear wheel according to claim 8 or 9, wherein said first spoke (31') is
connected to said rim (10) at a first rim attachment point (11), and to said first spoke attachment portion (22) at a first hub attachment point (220), wherein when driving the wheel, said first hub attachment point (220) deflects towards a driving direction (+X) relative to a plane constituting the center line (210) of the hub axle (21) and said first rim attachment point(11);
said second spoke (32') is connected to said rim (10) at a second rim attachment point (12), and to said first spoke attachment portion (22) at a second hub attachment point (221), wherein when driving the wheel, said second hub attachment point (221) deflects towards a direction (-X) opposite said driving direction, relative to a plane constituting said center line (210) of the hub axle (21) and said second rim attachment point (12).

12. The spoked rear wheel according to claim 11, wherein the amount of deflection of said first spoke (31') towards said driving direction (+X) is greater than the amount of deflection of said second spoke (32') towards the direction (-X) opposite said driving direction.

13. The spoked rear wheel according to claim 11, wherein said first spoke (31') is alternately arranged with said second spoke (32') along a peripheral direction of the wheel.

14. The spoked rear wheel according to any one of claims 8 to 10, wherein the total number of spokes of said first set of spokes (30') is less than that of said second set of spokes (40), in particular wherein the total number of spokes of said first set of spokes (30') is half the total number of spokes of said second set of spokes (40).

15. The spoked rear wheel according to any one of claims 8 to 10, wherein said second set of spokes (40) are arranged such that the spokes intersect each other as viewed from the direction parallel to said center line (210) of the hub axle (21).

## Patentansprüche

1. Speichenhinterrad für ein Fahrrad mit:
einer Felge (10),
einer Nabe (20), die eine Nabenachse (21), einen ersten Speichenbefestigungsabschnitt (22) und einen zweiten Speichenbefestigungsabschnitt (23) aufweist, der von dem ersten Speichenbefestigungsabschnitt (22) beabstandet ist,
einem ersten Satz Speichen (30) zur Verbindung der Felge mit dem ersten Speichenbefestigungsabschnitt (22), und
einem zweiten Satz Speichen (40) zur Verbindung der Felge mit dem zweiten Speichenbefestigungsabschnitt (23),
wobei der erste Satz Speichen (30) eine erste Speiche (31) und eine zweite Speiche (32) aufweist,
wobei die zweite Speiche (32) einen Felgenendabschnitt (320), der mit der Felge (10) verbunden ist, einen Nabenrandabschnitt (321), der mit dem ersten Speichenbefestigungsabschnitt (22) verbunden ist, einen zweiten Mittelabschnitt (322) zwischen dem Felgenendabschnitt (320) und dem Nabenrandabschnitt (321) mit einer zweiten Querschnittsfläche aufweist,
wobei die erste Speiche (31) einen Felgenendabschnitt (310), der mit der Felge (10) verbunden ist, einen Nabenrandabschnitt (311), der mit dem ersten Speichenbefestigungsabschnitt (22) verbunden ist, einen ersten Mittelabschnitt (312) zwischen dem Felgenendabschnitt (310) und dem Nabenrandabschnitt (311) mit einer ersten Querschnittsfläche aufweist, die größer als die zweite Querschnittsfläche ist.

2. Speichenhinterrad nach Anspruch 1, bei dem der zweite Speichenbefestigungsabschnitt (23) an einer Stelle angeordnet ist, die näher an einem Antriebsmechanismus liegt als der erste Speichenbefestigungsabschnitt (22).

3. Speichenhinterrad nach Anspruch 1 oder 2, bei dem die erste Speiche (31) an einem ersten Felgenbefestigungspunkt (11) mit der Felge (10) und an einem ersten Nabenbefestigungspunkt (220) mit dem ersten Speichenbefestigungsabschnitt (22) verbunden ist, wobei dann, wenn das Rad angetrieben wird, der erste Nabenbefestigungspunkt (220) zu einer Fahrtrichtung (+X) hin relativ zu einer Ebene ausgelenkt wird, die die Mittellinie (210) der Nabenachse (21) und den ersten Felgenbefestigungspunkt (11) enthält,
die zweite Speiche (32) an einem zweiten Felgenbefestigungspunkt (12) mit der Felge (10) und an einem zweiten Nabenbefestigungspunkt (221) mit dem ersten Speichenbefestigungsabschnitt (22) verbunden ist, wobei dann, wenn das Rad angetrieben wird, der zweite Nabenbefestigungspunkt (221) zu einer Richtung (-X) hin entgegen der Fahrtrichtung relativ zu einer Ebene ausgelenkt wird, die die Mittellinie (210) der Nabenachse (21) und den zweiten Felgenbefestigungspunkt (12) enthält.

4. Speichenhinterrad nach Anspruch 3, bei dem der Betrag der Auslenkung der ersten Speiche (31) zu der Fahrtrichtung (+X) hin größer als der Betrag der Auslenkung der zweiten Speiche (32) zu der Richtung (-X) entgegen der Fahrtrichtung hin ist.

5. Speichenhinterrad nach Anspruch 3, bei dem die erste Speiche (31) abwechselnd mit der zweiten Speiche (32) entlang einer Umfangsrichtung des Rades angeordnet ist.

6. Speichenhinterrad nach Anspruch 1 oder 2, bei dem die Gesamtzahl an Speichen des ersten Satzes Speichen (30) kleiner als die des zweiten Satzes Speichen (40) ist, insbesondere bei dem die Gesamtzahl an Speichen des ersten Satzes Speichen (30) die Hälfte der Gesamtzahl an Speichen des zweiten Satzes Speichen (40) beträgt.

7. Speichenhinterrad nach Anspruch 1 oder 2, bei dem der zweite Satz Speichen (40) so angeordnet ist, dass die Speichen, aus der Richtung parallel zur Mittellinie (210) der Nabenachse (21) betrachtet, einander schneiden.

8. Speichenhinterrad für ein Fahrrad mit:
einer Felge (10),
einer Nabe (20), die eine Nabenachse (21), einen ersten Speichenbefestigungsabschnitt (22) und einen zweiten Speichenbefestigungsabschnitt (23) aufweist, der von dem ersten Speichenbefestigungsabschnitt (22) beabstandet ist,
einem ersten Satz Speichen (30') zur Verbindung der Felge mit dem ersten Speichenbefestigungsabschnitt (22), und
einem zweiten Satz Speichen (40) zur Verbindung der Felge mit dem zweiten Speichenbefestigungsabschnitt (23),
wobei der erste Satz Speichen (30') wenigstens zwei Speichen (31', 32') aus unterschiedlichen Materialien aufweist.

9. Speichenhinterrad nach Anspruch 8, bei dem die zwei Speichen (31', 32') aus unterschiedlichen Materialien eine aus einem ersten Material gebildete erste Speiche (31') und eine aus einem zweiten Material gebildete zweite Speiche (32') umfassen, wobei der Elastizitätsmodul des ersten Materials höher als der des zweiten Materials ist.

10. Speichenhinterrad nach Anspruch 8, bei dem der zweite Speichenbefestigungsabschnitt (23) an einer Stelle angeordnet ist, die näher an einem Antriebsmechanismus liegt als der erste Speichenbefestigungsabschnitt (22).

11. Speichenhinterrad nach Anspruch 8 oder 9, bei dem die erste Speiche (31')
an einem ersten Felgenbefestigungspunkt (11) mit der Felge (10) und an einem ersten Nabenbefestigungspunkt (220) mit dem ersten Speichenbefestigungsabschnitt (22) verbunden ist, wobei dann, wenn das Rad angetrieben wird, der erste Nabenbefestigungspunkt (220) zu einer Fahrtrichtung (+X) hin relativ zu einer Ebene ausgelenkt wird, die die Mittellinie (210) der Nabenachse (21) und den ersten Felgenbefestigungspunkt (11) bildet,
die zweite Speiche (32') an einem zweiten Felgenbefestigungspunkt (12) mit der Felge (10) und an einem zweiten Nabenbefestigungspunkt (221) mit dem ersten Speichenbefestigungsabschnitt (22) verbunden ist, wobei dann, wenn das Rad angetrieben wird, der zweite Nabenbefestigungspunkt (221) zu einer Richtung (-X) hin entgegen der Fahrtrichtung relativ zu einer Ebene ausgelenkt wird, die die Mittellinie (210) der Nabenachse (21) und den zweiten Felgenbefestigungspunkt (12) bildet.

12. Speichenhinterrad nach Anspruch 11, bei dem der Betrag der Auslenkung der ersten Speiche (31') zu der Fahrtrichtung (+X) hin größer als der Betrag der Auslenkung der zweiten Speiche (32') zu der Richtung (-X) entgegen der Fahrtrichtung hin ist.

13. Speichenhinterrad nach Anspruch 11, bei dem die erste Speiche (31') abwechselnd mit der zweiten Speiche (32') entlang einer Umfangsrichtung des Rades angeordnet ist.

14. Speichenhinterrad nach einem der Ansprüche 8 bis 10, bei dem die Gesamtzahl an Speichen des ersten Satzes Speichen (30') kleiner als die des zweiten Satzes Speichen (40) ist, insbesondere bei dem die Gesamtzahl an Speichen des ersten Satzes Speichen (30') die Hälfte der Gesamtzahl an Speichen des zweiten Satzes Speichen (40) beträgt.

15. Speichenhinterrad nach einem der Ansprüche 8 bis 10, bei dem der zweite Satz Speichen (40) so angeordnet ist, dass die Speichen, aus der Richtung parallel zur Mittellinie (210) der Nabenachse (21) betrachtet, einander schneiden.

## Revendications

1. Roue arrière à rayons pour bicyclette, comprenant :
une jante (10) ;
un moyeu (20) présentant un essieu de moyeu (21), un premier tronçon (22) de fixation de rayons, et un deuxième tronçon (23) de fixation de rayons espacé du premier tronçon (22) de fixation de rayons ;
un premier ensemble de rayons (30) pour raccorder la jante au premier tronçon (22) de fixation de rayons ; et
un deuxième ensemble de rayons (40) pour raccorder la jante au deuxième tronçon (23) de fixation de rayons ;
le premier ensemble de rayons (30) comprenant un premier rayon (31) et un deuxième rayon (32) ;
le deuxième rayon (32) comprenant un tronçon d'extrémité de jante (320) relié à la jante (10), un tronçon de bord de moyeu (321) relié au premier tronçon (22) de fixation de rayons, un deuxième tronçon médian (322) entre le tronçon d'extrémité de jante (320) et le tronçon de bord de moyeu (321), et présentant une deuxième superficie de section,
le premier rayon (31) comprenant un tronçon d'extrémité de jante (310) relié à la jante (10), un tronçon de bord de moyeu (311) relié au premier tronçon (22) de fixation de rayons, un premier tronçon médian (312) entre le tronçon d'extrémité de jante (310) et le tronçon de bord de moyeu (311), et présentant une première superficie de section supérieure à la deuxième superficie de section.

2. Roue arrière à rayons selon la revendication 1, dans laquelle le deuxième tronçon (23) de fixation de rayons est agencé dans une position plus proche d'un mécanisme d'entraînement que le premier tronçon (22) de fixation de rayons.

3. Roue arrière à rayons selon la revendication 1 ou 2, dans laquelle le premier rayon (31) est relié à la jante (10) à un premier point (11) de fixation de jante, et au premier tronçon (22) de fixation de rayons à un premier point (220) de fixation de moyeu, le premier point (220) de fixation de moyeu déviant lors de l'entraînement de la roue vers un sens d'entraînement (+X) par rapport à un plan contenant l'axe médian (210) de l'essieu de moyeu (21) et le premier point (11) de fixation de jante ;
le deuxième rayon (32) est relié à la jante (10) à un deuxième point (12) de fixation de jante, et au premier tronçon (22) de fixation de rayons à un deuxième point (221) de fixation de moyeu, le deuxième point (221) de fixation de moyeu déviant lors de l'entraînement de la roue vers un sens (-X) opposé au sens d'entraînement par rapport à un plan contenant l'axe médian (210) de l'essieu de moyeu (21) et le deuxième point (12) de fixation de jante.

4. Roue arrière à rayons selon la revendication 3, dans laquelle le degré de déviation du premier rayon (31) vers le sens d'entraînement (+X) est supérieur au degré de déviation du deuxième rayon (32) vers le sens (-X) opposé au sens d'entraînement.

5. Roue arrière à rayons selon la revendication 3, dans laquelle le premier rayon (31) est agencé en alternance avec le deuxième rayon (32) selon un sens périphérique de la roue.

6. Roue arrière à rayons selon la revendication 1 ou 2, dans laquelle le nombre total de rayons du premier ensemble de rayons (30) est inférieur à celui du deuxième ensemble de rayons (40), en particulier dans laquelle le nombre total de rayons du premier ensemble de rayons (30) est égal à la moitié du nombre total de rayons du deuxième ensemble de rayons (40).

7. Roue arrière à rayons selon la revendication 1 ou 2, dans laquelle le deuxième ensemble de rayons (40) est agencé de telle sorte que les rayons se coupent dans une vue depuis le sens qui est parallèle à l'axe médian (210) de l'essieu de moyeu (21).

8. Roue arrière à rayons pour bicyclette, comprenant :
une jante (10) ;
un moyeu (20) présentant un essieu de moyeu (21), un premier tronçon (22) de fixation de rayons, et un deuxième tronçon (23) de fixation de rayons espacé du premier tronçon (22) de fixation de rayons ;
un premier ensemble de rayons (30') pour raccorder la jante au premier tronçon (22) de fixation de rayons ; et
un deuxième ensemble de rayons (40) pour raccorder la jante au deuxième tronçon (23) de fixation de rayons ;
dans laquelle le premier ensemble de rayons (30') comprend au moins deux rayons (31', 32') de matières différentes.

9. Roue arrière à rayons selon la revendication 8, dans laquelle les deux rayons (31', 32') de matières différentes comprennent un premier rayon (31') réalisé en une première matière, et un deuxième rayon (32') réalisé en une deuxième matière, le module d'élasticité de la première matière étant supérieur à celui de la deuxième matière.

10. Roue arrière à rayons selon la revendication 8, dans laquelle le deuxième tronçon (23) de fixation de rayons est agencé dans une position plus proche d'un mécanisme d'entraînement que le premier tronçon (22) de fixation de rayons.

11. Roue arrière à rayons selon la revendication 8 ou 9, dans laquelle le premier rayon (31') est relié à la jante (10) à un premier point (11) de fixation de jante, et au premier tronçon (22) de fixation de rayons à un premier point (220) de fixation de moyeu, le premier point (220) de fixation de moyeu déviant lors de l'entraînement de la roue vers un sens d'entraînement (+X) par rapport à un plan constituant l'axe médian (210) de l'essieu de moyeu (21) et le premier point (11) de fixation de jante ;
le deuxième rayon (32') est relié à la jante (10) à un deuxième point (12) de fixation de jante, et au premier tronçon (22) de fixation de rayons à un deuxième point (221) de fixation de moyeu, le deuxième point (221) de fixation de moyeu déviant lors de l'entraînement de la roue vers un sens (-X) opposé au sens d'entraînement par rapport à un plan constituant l'axe médian (210) de l'essieu de moyeu (21) et le deuxième point (12) de fixation de jante.

12. Roue arrière à rayons selon la revendication 11, dans laquelle le degré de déviation du premier rayon (31') vers le sens d'entraînement (+X) est supérieur au degré de déviation du deuxième rayon (32') vers le sens (-X) opposé au sens d'entraînement.

13. Roue arrière à rayons selon la revendication 11, dans laquelle le premier rayon (31') est agencé en alternance avec le deuxième rayon (32') selon un sens périphérique de la roue.

14. Roue arrière à rayons selon l'une des revendications 8 à 10, dans laquelle le nombre total de rayons du premier ensemble de rayons (30') est inférieur à celui du deuxième ensemble de rayons (40), en particulier dans laquelle le nombre total de rayons du premier ensemble de rayons (30') est égal à la moitié du nombre total de rayons du deuxième ensemble de rayons (40).

15. Roue arrière à rayons selon l'une des revendications 8 à 10, dans laquelle le deuxième ensemble de rayons (40) est agencé de telle sorte que les rayons se coupent dans une vue depuis le sens qui est parallèle à l'axe médian (210) de l'essieu de moyeu (21).
